# FASCICULE DE BREVET EUROPEEN

(11) **EP 2 998 963 B1**
(45) Date de publication et mention de la délivrance du brevet: **09.11.2016**
(21) Numéro de dépôt: 15183915.6
(22) Date de dépôt: 04.09.2015
(51) Int. Cl.: G21C 17/01, G21C 19/20, F22B 37/48, G21D 1/00

(54) **DISPOSITIF DE GUIDAGE POUR LANCE FLEXIBLE**
FÜHRUNGSVORRICHTUNG FÜR FLEXIBLEN LANZE
GUIDING DEVICE FOR FLEXIBLE LANCE

(30) Priorité: 16.09.2014 FR 1458709
(43) Date de publication de la demande: 23.03.2016
(73) Titulaire: SRA Savac, 69516 Vaulx En Velin (FR)
(72) Inventeur: MANDIER, Jean-Paul, 38300 Domarin (FR)
(74) Mandataire: Verriest, Philippe

(56) Documents cités:
- FR-A1- 2 679 370
- FR-A1- 2 961 003
- US-A1- 2011 169 938

## Description

La présente invention concerne un dispositif de guidage pour lance flexible pour accéder à des endroits difficilement accessibles, tels que par exemple l'intérieur d'un générateur de vapeur équipant une centrale thermique notamment du type nucléaire.

Un générateur de vapeur équipant une centrale thermique, et plus particulièrement une centrale nucléaire, comporte généralement d'une part une partie formant échangeur de chaleur comprenant un circuit primaire dans lequel circule de l'eau chaude à très haute pression provenant d'un réacteur, et un circuit secondaire dans lequel l'eau est portée à ébullition, et d'autre part une partie appelée séparateur à cyclones permettant la surgénération de vapeur. La vapeur ainsi formée s'échappe alors du générateur de vapeur et est utilisée pour faire tourner des turbines couplées à un alternateur.

La partie formant échangeur de chaleur d'un générateur de vapeur comporte notamment une enceinte globalement cylindrique formée par une enveloppe externe, appelée virole, et une enveloppe interne, appelée jupe, et munie, en partie basse, de deux ouvertures de diamètre inférieur à 40 cm et diamétralement opposées, dites trous de poing. Cette partie formant échangeur de chaleur comporte en outre des tubes d'écoulement métalliques disposés dans le volume délimité par la jupe, et présentant une forme générale de U inversé. Les tubes d'écoulement sont destinés à la circulation de l'eau du circuit primaire, et à échanger de la chaleur avec l'eau du circuit secondaire se trouvant à l'intérieur de la jupe. Ces tubes d'écoulement sont montés, en partie basse, sur une plaque support appelée plaque tubulaire et traversent des plaques entretoises espacées régulièrement les unes des autres et parallèles entre elles. Les plaques entretoises comportent, pour le passage des tubes d'écoulement, des ouvertures de passage, chaque ouverture de passage formant des zones de contact avec un tube d'écoulement respectif pour assurer la tenue de celui-ci et délimitant des zones de passage pour l'eau ou la vapeur du circuit secondaire, suivant la position de la plaque entretoise correspondante.

Lors du fonctionnement d'un générateur de vapeur, l'eau présente dans l'enceinte du générateur est portée à haute température et à haute pression dans le but de générer de la vapeur. Les tubes d'écoulement et les autres parties métalliques du séparateur à cyclones sont alors soumis à des conditions extrêmes qui occasionnent une corrosion inévitable. Sans intervention, des dépôts liés à cette corrosion s'accumulent sur la plaque tubulaire et les plaques entretoises, et peuvent notamment colmater, au moins partiellement, les zones de passage précitées, ce qui nuit au rendement du générateur de vapeur, mais également à la sûreté du fonctionnement de ce dernier si le taux de colmatage atteint une valeur élevée. Pour cette raison, ce type d'installation doit être régulièrement inspectée et nettoyée de ces dépôts. Cette inspection et ce nettoyage se font généralement au moyen de lances équipées soit d'une caméra d'inspection soit de jets d'eau à haute pression. Pour atteindre des endroits précis du générateur de vapeur, il est commun d'utiliser, pour guider ces lances au travers des ouvertures exiguës que sont les trous poing, un dispositif de guidage de lance.

Ce type de dispositif doit pouvoir se déplacer dans l'enceinte circulaire du générateur de vapeur pour que la lance, généralement flexible, puisse être déployée pour inspecter et, le cas échéant, nettoyer, la base des tubes d'écoulement et la plaque tubulaire.

Pour réaliser ces opérations d'inspection ou de nettoyage de l'enceinte d'un générateur de vapeur, il est connu d'utiliser un ensemble d'inspection et de nettoyage, tel que décrit dans le document FR2961003.

L'ensemble d'inspection et de nettoyage décrit dans le document FR2961003 comprend une lance de nettoyage et/ou d'inspection flexible, et un dispositif de guidage de la lance flexible. Le dispositif de guidage comporte plus particulièrement un système d'entrainement et de guidage de la lance flexible et des moyens de maintien et de déplacement sur la face intérieure d'une paroi cylindrique délimitant l'enceinte d'un générateur de vapeur. Les moyens de maintien et de déplacement comportent deux roues motorisées indépendamment l'une de l'autre et équipées d'éléments en aimant permanent, les deux roues motorisées présentant des axes de rotation parallèles et décalés l'un par rapport à l'autre.

Un tel décalage des axes des roues motorisées du dispositif de guidage permet le passage d'obstacles, tels que des soudures verticales, présents sur la paroi de l'enceinte à inspecter/nettoyer. En effet, lors d'une telle rencontre, une seule de ces deux roues d'entraînement sera simultanément bloquée. En outre, la motorisation indépendante des deux roues motorisées permet également un contrôle de la direction de déplacement du dispositif de guidage sur la paroi de l'enceinte.

De plus, une telle configuration des moyens de maintien et de déplacement permet au dispositif de guidage d'accéder à tout le pourtour intérieur de l'enceinte, et donc d'assurer un déploiement de la lance dans toutes les zones de l'enceinte à inspecter ou nettoyer.

Néanmoins, la configuration des moyens de maintien et de déplacement du dispositif de guidage décrit dans le document FR2961003 ne permet pas d'assurer une stabilité satisfaisante au dispositif de guidage notamment lorsqu'il est associé à une lance de nettoyage à haute pression.

La présente invention vise à remédier à ces inconvénients.

Le problème technique à la base de l'invention consiste donc à fournir un dispositif de guidage d'une lance de nettoyage qui peut être aisément introduit dans une enceinte confinée avec un accès difficile, telle que par exemple l'intérieur d'un générateur de vapeur équipant une centrale thermique, tout en présentant une stabilité satisfaisante y compris lorsqu'il est équipée d'une lance de nettoyage à haute pression.

A cet effet, la présente invention concerne un dispositif de guidage destiné à guider une lance flexible pour le nettoyage d'une enceinte équipée d'une ouverture d'accès, le dispositif de guidage s'étendant selon une direction d'extension et comportant :
- une partie de transport comprenant des moyens de roulement configurés pour rouler sur une paroi de l'enceinte, et des moyens de maintien configurés pour maintenir les moyens de roulement en contact avec ladite paroi lors des déplacements du dispositif de guidage le long de ladite paroi,
- une partie de liaison montée sur la partie de transport et destinée à être reliée à un dispositif d'alimentation électrique,
- une partie de guidage et d'entraînement comprenant un système d'entraînement configuré pour, en conditions d'utilisation, déplacer la lance flexible entre une position rétractée et une position déployée, la partie de guidage et d'entraînement étant montée pivotante sur la partie de transport autour d'un premier axe de pivotement s'étendant transversalement à la direction d'extension, la partie de transport étant disposée entre la partie de liaison et la partie de guidage et d'entraînement,
caractérisé en ce que la partie de transport comporte un premier module de transport et un deuxième module de transport montés articulés l'un par rapport à l'autre, en ce que les moyens de roulement comportent au moins une roue motrice montée sur le premier module de transport, et au moins une roue directrice montée sur le deuxième module de transport, et en ce que le dispositif de guidage comprend un système de direction monté sur le deuxième module de transport et configuré pour régler l'angle de braquage de l'au moins une roue directrice.

Une telle configuration du dispositif de guidage, et plus particulièrement de la partie de transport et des moyens de roulement, assure d'une part une introduction aisée du dispositif de guidage à travers une ouverture d'accès de faibles dimensions d'une enceinte confinée, telle qu'un générateur de vapeur, et d'autre part une stabilité optimisée du dispositif de guidage lors de ses déplacements dans ladite enceinte confinée, et ce y compris lorsqu'il est équipée d'une lance de nettoyage à haute pression.

Selon un mode de réalisation de l'invention, le dispositif de guidage comprend un système de motorisation configuré pour entraîner en pivotement la partie de guidage et d'entraînement par rapport à la partie de transport autour du premier axe de pivotement. Par exemple, le système de motorisation peut être disposé sur le deuxième module de transport.

Selon un mode de réalisation de l'invention, le premier module de transport et le deuxième module de transport sont montés articulés l'un par rapport à l'autre autour d'au moins un axe d'articulation s'étendant transversalement à la direction d'extension du dispositif de guidage.

Selon un mode de réalisation de l'invention, la partie de transport comporte au moins un organe de raccordement configuré pour raccorder les premier et deuxième modules de transport entre eux, les premier et deuxième modules de transport étant montés articulés sur l'au moins un organe de raccordement autour respectivement de deux axes d'articulation parallèles et s'étendant transversalement à la direction d'extension du dispositif de guidage.

Selon un mode de réalisation de l'invention, la partie de liaison est montée sur le premier module de transport et la partie de guidage et d'entraînement est montée sur le deuxième module de transport.

Selon un mode de réalisation de l'invention, la partie de liaison est montée pivotante sur la partie de transport autour d'un deuxième axe de pivotement s'étendant transversalement à la direction d'extension du dispositif de guidage. Un tel montage de la partie de liaison sur la partie de transport permet au dispositif de guidage d'épouser au mieux la courbure de la paroi de l'enceinte.

Selon un mode de réalisation de l'invention, les moyens de maintien comportent des éléments magnétiques, tels que des éléments en aimant permanent, configurés pour coopérer par aimantation avec la paroi de l'enceinte.

Selon un mode de réalisation de l'invention, chaque roue motrice est équipée d'au moins un élément magnétique configuré pour coopérer par aimantation avec la paroi de l'enceinte, et chaque roue directrice est équipée d'au moins un élément magnétique configuré pour coopérer par aimantation avec la paroi de l'enceinte. L'utilisation de roues comprenant des éléments magnétiques est idéale pour un maintien sur des parois métalliques telles que celles équipant les enceintes des générateurs de vapeur de centrales nucléaires.

Selon un mode de réalisation de l'invention, les premier et deuxième modules de transport comprennent chacun au moins un organe d'appui configuré pour prendre appui contre la paroi lors des déplacements du dispositif de guidage le long de ladite paroi. De tels organes d'appui permettent d'optimiser la stabilité du dispositif de guidage lors du déploiement de la lance.

Selon un mode de réalisation de l'invention, les moyens de roulement comportent au moins deux roues motrices montées sur le premier module de transport et d'axes de rotation sensiblement parallèles, et au moins deux roues directrices montées sur le deuxième module de transport.

Selon un mode de réalisation de l'invention, les axes de rotation des roues motrices s'étendent sensiblement perpendiculairement à la direction d'extension du dispositif de guidage.

Selon un mode de réalisation de l'invention, les deux roues motrices sont motorisées indépendamment l'une de l'autre, et le dispositif de guidage comprend deux mécanismes d'entraînement en rotation montés sur le premier module de transport et configurés pour entraîner en rotation respectivement les deux roues motrices.

Selon un mode de réalisation de l'invention, le système de direction comprend :
- au moins un organe de support sur lequel est monté mobile en rotation l'au moins une roue directrice, l'au moins un organe de support étant monté pivotant sur le deuxième module de transport autour d'un axe de pivotement,
- un moteur d'entraînement, et
- un mécanisme de transformation de mouvement configuré pour transformer le mouvement de rotation du moteur d'entraînement en un mouvement de pivotement de l'au moins un organe de support.

Selon un mode de réalisation de l'invention, l'axe de pivotement de l'au moins un organe de support s'étend sensiblement perpendiculairement à la direction d'extension du dispositif de guidage et aux axes de rotation des roues motrices.

Selon un mode de réalisation de l'invention, le système de direction comprend deux organes de support sur chacun desquels est monté mobile en rotation une roue directrice, chaque organe de support étant monté pivotant sur le deuxième module de transport autour d'un axe de pivotement.

Selon un mode de réalisation de l'invention, le mécanisme de transformation de mouvement comprend une barre d'accouplement comprenant deux portions de liaison reliées respectivement aux deux organes de support, la barre d'accouplement étant montée mobile en translation par rapport au deuxième module de transport selon une direction de déplacement de telle sorte qu'un déplacement en translation de la barre d'accouplement selon la direction de déplacement entraîne un pivotement des organes de support autour de leur axe de pivotement.

Selon un mode de réalisation de l'invention, le mécanisme de transformation de mouvement comprend en outre :
- un élément d'entraînement solidaire en translation de la barre d'accouplement et pourvu d'un alésage taraudé, et
- un élément de transmission solidaire en translation du deuxième module de transport et couplé en rotation au moteur d'entraînement, l'élément de transmission étant pourvu d'une portion filetée configurée pour coopérer avec l'alésage taraudé de l'élément d'entraînement de telle sorte qu'une rotation de l'élément de transmission entraîne une translation de l'élément d'entraînement.

Selon un mode de réalisation de l'invention, l'élément de transmission comprend une denture périphérique couplée en rotation avec un pignon solidaire de l'arbre de sortie du moteur d'entraînement.

Selon un mode de réalisation de l'invention, chaque portion de liaison est pourvue d'un orifice de montage oblong dans lequel est monté mobile une portion de montage de l'organe de support respectif.

Selon un mode de réalisation de l'invention, le système d'entraînement comprend une courroie d'entraînement équipée d'ergots destinés à engrener avec des trous ménagés sur la lance. La présence d'une telle courroie d'entraînement permet un entraînement robuste, continu et contrôlé de la lance, qualité importante pour un dispositif de guidage destiné à être installé dans une enceinte à accès difficile ne permettant pas l'intervention d'un technicien. De plus, la structure de la courroie d'entraînement permet d'assurer, lors de l'entraînement de la lance, une coopération simultanée d'au moins deux ergots avec des trous de la lance, ce qui favorise la transmission des efforts de la courroie d'entraînement à la lance, sans risque de détérioration de la lance.

Selon un mode de réalisation de l'invention, le système d'entraînement comprend un moteur d'entraînement configuré pour entraîner la courroie d'entraînement.

Selon un mode de réalisation de l'invention, le système d'entraînement comprend au moins un organe d'entraînement, tel qu'un galet d'entraînement, sur lequel est engagée la courroie d'entraînement, et un mécanisme d'accouplement configuré pour coupler en rotation le moteur d'entraînement et l'organe d'entraînement.

Selon un mode de réalisation de l'invention, la partie de transport et la partie de guidage et d'entraînement délimitent un passage de guidage dans lequel est destinée à s'étendre la lance flexible.

Selon un mode de réalisation de l'invention, le deuxième module de transport comporte une ouverture d'entrée débouchant dans le passage de guidage et à travers laquelle est destinée à être insérée la lance flexible, et la partie de guidage et d'entraînement comporte une ouverture de sortie à travers laquelle est destinée à faire saillie la lance flexible.

Selon un mode de réalisation de l'invention, le premier module de transport et/ou la partie de liaison comporte au moins un élément de guidage, tel qu'un cavalier de guidage, configuré pour guider la lance flexible.

Selon un mode de réalisation de l'invention, le dispositif de guidage comporte des moyens de contrôle configurés pour contrôler le positionnement du dispositif de guidage.

Selon un mode de réalisation de l'invention, les moyens de contrôle comportent au moins une caméra de contrôle et au moins une source laser disposés sur un coté du dispositif de guidage et configurés pour contrôler l'altitude du dispositif de guidage.

Selon un mode de réalisation de l'invention, les moyens de contrôle comportent au moins un inclinomètre configuré pour contrôler l'horizontalité du dispositif de guidage lors de ses déplacements le long de la paroi.

Selon un mode de réalisation de l'invention, les moyens de contrôle comportent au moins une caméra de contrôle d'orientation disposée sur la partie de guidage et d'entraînement et configurée pour contrôler l'orientation de la partie de guidage et d'entraînement par rapport à la partie de transport. Avantageusement, la partie de guidage et d'entraînement comporte un système d'éclairage associé à ladite caméra de contrôle d'orientation.

Selon un mode de réalisation de l'invention, la partie de guidage et d'entraînement est équipée d'une caméra de contrôle de déploiement orientée sensiblement parallèlement à la direction de déploiement de la lance. Une telle caméra de contrôle de déploiement permet de suivre visuellement la lance durant sont déploiement pour pouvoir ainsi la placer précisément à l'endroit à nettoyer.

Avantageusement, la partie de guidage et d'entraînement comporte un système d'éclairage associé à ladite caméra de contrôle de déploiement.

Selon un mode de réalisation de l'invention, la partie de guidage et d'entraînement comprend un élément de détection, tel qu'un capteur inductif, configuré pour détecter, en conditions d'utilisation, un positionnement de la lance en position rétractée. L'élément de détection est ainsi configuré pour détecter un retour de la lance dans sa position rétractée.

Selon un mode de réalisation de l'invention, le dispositif de guidage comprend une unité de commande configurée pour empêcher un déplacement de la partie de transport tant que l'élément de détection n'a pas détecté un positionnement de la lance en position rétractée, et plus particulièrement tant que l'élément de détection n'a pas détecté un retour de la lance dans sa position rétractée.

Selon un mode de réalisation de l'invention, la partie de liaison comprend un câble d'alimentation électrique et de commande flexible destiné à être relié à un dispositif de commande et d'alimentation électrique.

Selon un mode de réalisation de l'invention, les premier et deuxième axes de pivotement s'étendent sensiblement parallèlement aux axes de rotation des roues motrices.

Selon un mode de réalisation de l'invention, au moins deux des roues motrices présentent des axes de rotation sensiblement coaxiaux.

La présente invention concerne en outre un ensemble pour le nettoyage d'une enceinte équipée d'une ouverture d'accès, comprenant :
- un dispositif de guidage selon la présente invention, et
- une lance de nettoyage haute pression flexible et de section rectangulaire, la lance de nettoyage haute pression comprenant plusieurs conduits d'amenée de liquide sous pression et une portion d'extrémité comprenant plusieurs orifices de sortie reliés fluidiquement aux conduits d'amenée de liquide sous pression.

Un tel ensemble est idéal pour le nettoyage d'une enceinte confinée avec un accès difficile, telle que l'enceinte d'un générateur de vapeur de centrale nucléaire.

Selon un mode de réalisation de l'invention, les orifices de sortie s'étendent sensiblement perpendiculairement à un axe longitudinal de la lance de nettoyage haute pression.

Selon un mode de réalisation de l'invention, la portion d'extrémité de la lance de nettoyage haute pression comprend au moins un orifice de sortie débouchant sur un premier bord longitudinal de la lance de nettoyage haute pression, et au moins un orifice de sortie débouchant sur un deuxième bord longitudinal de la lance de nettoyage haute pression opposé au premier bord longitudinal. Une telle configuration des orifices de sortie permet d'équilibrer les efforts induits sur la lance par le liquide à haute pression, et donc de nettoyer les dépôts corrodés présents au fond de l'enceinte de façon stable.

De toute façon l'invention sera bien comprise à l'aide de la description qui suit, en référence aux dessins schématiques annexés représentant, à titre d'exemple non limitatif, une forme d'exécution de ce dispositif de guidage de lance.
Figure 1 est une vue partielle de l'intérieur d'un générateur de vapeur dans lequel travaille un dispositif de guidage selon l'invention ;
Figure 2 est une vue en perspective du dispositif de guidage de la figure 1 ;
Figure 3 est une vue de coté du dispositif de guidage ;
Figure 4 est une vue de dessous du dispositif de guidage ;
Figure 5 est une vue partielle en perspective, à échelle agrandie, d'une partie d'entraînement et de guidage appartenant au dispositif de guidage ;
Figure 6 est une vue partielle de dessous, à échelle agrandie, du dispositif de guidage ;
Figures 7 et 8 sont des vues en coupe transversale du dispositif de guidage respectivement selon un plan de coupe passant par les roues motrices du dispositif de guidage et selon un plan de coupe passant par les roues directrices du dispositif de guidage ;
Figure 9 est une vue en perspective du dispositif de guidage équipé d'une lance de nettoyage ;
Figure 10 est une vue en coupe du dispositif de guidage équipé d'une lance de nettoyage, montrant la coopération entre la lance de nettoyage et son système d'entraînement prévu sur le dispositif de guidage.

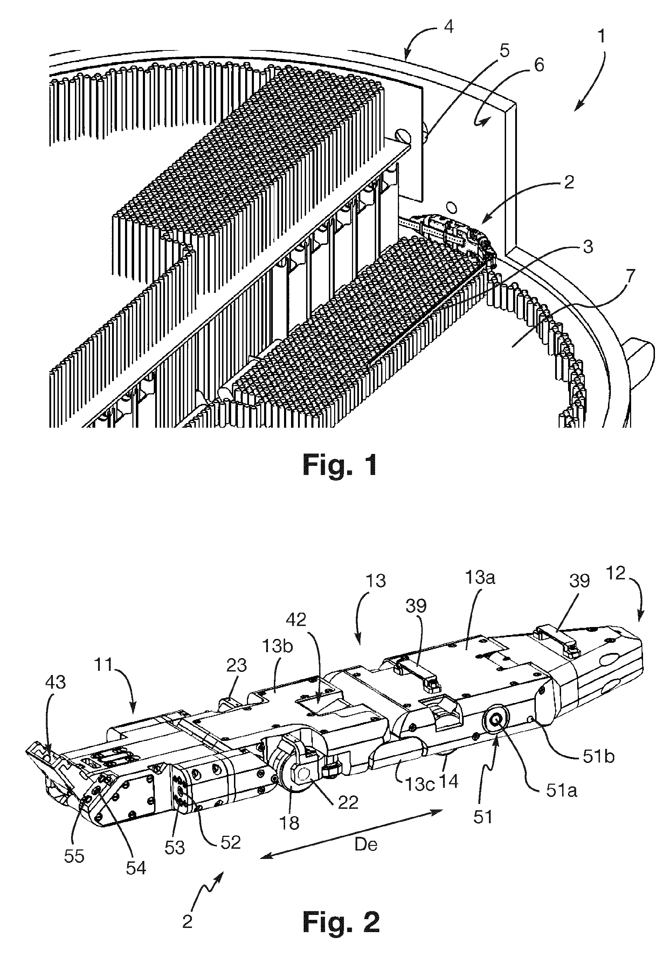

La figure 1 représente partiellement l'intérieur d'un échangeur de chaleur 1 équipant un générateur de vapeur de centrale nucléaire dans lequel travail un dispositif de guidage 2 destiné à guider une lance de nettoyage haute pression 3 flexible. Un tel échangeur de chaleur 1 comporte une enceinte 4 métallique et globalement cylindrique munie de deux ouvertures 5 de diamètre inférieur à 40 cm et diamétralement opposées, dites trous de poing. Cette enceinte 4 présente une paroi 6, également appelée virole, dont la face intérieure est métallique. L'enceinte 4 est également munie d'une plaque support 7, appelée plaque tubulaire, et de tubes d'écoulement 8 métalliques présentant une forme générale de U inversé, ces tubes d'écoulement étant montés, en partie basse, sur la plaque support 7.

Le dispositif de guidage 2 se présente sous la forme d'un chariot allongé s'étendant selon une direction d'extension De, et comporte une partie de guidage et d'entraînement 11 disposée à l'avant du dispositif de guidage 2, une partie de liaison 12 disposée à l'arrière du dispositif de guidage 2 et destinée à être reliée à un dispositif de commande et d'alimentation électrique (non représenté sur les figures), et enfin une partie de transport 13 disposée entre la partie de guidage et d'entraînement 11 et la partie de liaison 12.

La partie de transport 13 comporte plus particulièrement un premier module de transport 13a, un deuxième module de transport 13b et deux organes de raccordement 13c configurés pour raccorder les premier et deuxième modules de transport 13a, 13b entre eux. Les premier et deuxième modules de transport 13a, 13b sont montés articulés sur chaque organe de raccordement 13c autour respectivement de deux axes d'articulation A, B parallèles et s'étendant perpendiculairement à la direction d'extension De du dispositif de guidage 2. Chacun des premier et deuxième modules de transport 13a, 13b peut par exemple présenter une forme générale en parallélépipède rectangle aplati.

Le dispositif de guidage 2 comporte en outre deux roues motrices 14, 15 montées sur le premier module de transport 13a et conformées pour rouler sur la paroi 6 de l'enceinte 4. Les deux roues motrices 14, 15 présentent des axes de rotation coaxiaux s'étendant perpendiculairement à la direction d'extension De du dispositif de guidage 2.

Les deux roues motrices 14, 15 sont avantageusement motorisées indépendamment l'une de l'autre. Selon le mode de réalisation représenté sur les figures, le dispositif de guidage 2 comporte deux mécanismes d'entraînement en rotation montés sur le premier module de transport 13a et configurés pour entraîner en rotation respectivement les deux roues motrices 14, 15. Ces deux mécanismes d'entraînement en rotation comportent par exemple deux moteurs d'entraînement 16, 17 couplés en rotation respectivement aux deux roues motrices 14, 15.

Le dispositif de guidage 2 comporte en outre deux roues directrices 18, 19 montées sur le deuxième module de transport 13b et conformées pour rouler sur la paroi 6 de l'enceinte 4, et un système de direction 21 monté sur le deuxième module de transport 13b et configuré pour régler l'angle de braquage des deux roues directrices 18, 19.

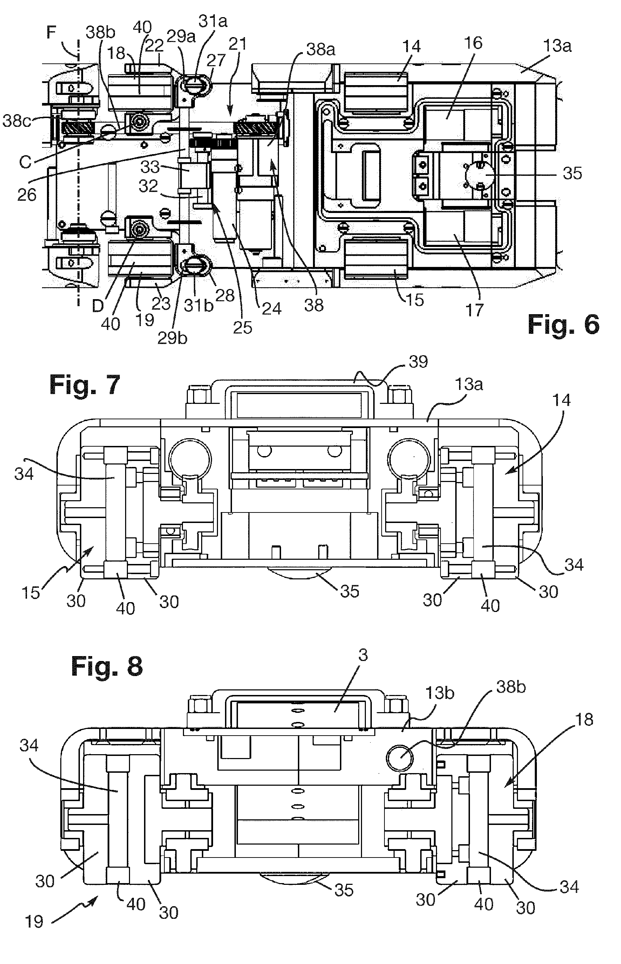

Comme montré plus particulièrement sur la figure 6, le système de direction 21 comprend deux organes de support 22, 23 sur chacun desquels est monté mobile en rotation l'une des roues directrices 18, 19. Chacun des organes de support 22, 23 est monté pivotant sur le deuxième module de transport autour d'un axe de pivotement C, D respectif. Chacun des organes de support 22, 23 peut par exemple présenter une forme de chape.

Le système de direction 21 comprend en outre un moteur d'entraînement 24, et un mécanisme de transformation de mouvement 25 configuré pour transformer le mouvement de rotation du moteur d'entraînement 24 en un mouvement de pivotement des organes de support 22, 23.

Selon le mode de réalisation représenté sur les figures, le mécanisme de transformation de mouvement 25 comprend une barre d'accouplement 26 comprenant deux portions de liaison 27, 28 reliées respectivement aux deux organes de support 22, 23. La barre d'accouplement 26 est montée mobile en translation par rapport au deuxième module de transport 13b selon une direction de déplacement sensiblement parallèle à la direction d'extension de la barre d'accouplement 26 de telle sorte qu'un déplacement en translation de la barre d'accouplement 26 selon ladite direction de déplacement entraîne un pivotement des organes de support 22, 23 autour de leur axe de pivotement C, D respectif.

Selon le mode de réalisation représenté sur les figures, chaque portion d'accouplement 27, 28 est pourvue d'un orifice de montage 29a, 29b oblong dans lequel est monté mobile une portion de montage 31 a, 31 b de l'organe de support 22, 23 respectif. Chaque orifice de montage 29a, 29b s'étend par exemple sensiblement parallèlement à la direction d'extension De du dispositif de guidage 2.

Le mécanisme de transformation de mouvement 25 comprend en outre un élément de transmission 32 solidaire en translation du deuxième module de transport 13b et couplé en rotation au moteur d'entraînement 24, et un élément d'entraînement 33 solidaire en translation de la barre d'accouplement 26. Avantageusement, l'élément de transmission 32 est pourvu d'une portion filetée (non représentée sur les figures) configurée pour coopérer avec un alésage taraudé (non représentée sur les figures) prévu sur l'élément d'entraînement 33 de telle sorte qu'une rotation de l'élément de transmission 32 entraîne une translation de l'élément d'entraînement 33, et donc de la barre d'accouplement 26.

Chacune des roues motrices 14, 15 et directrices 18, 19 est avantageusement équipée d'un ou de plusieurs éléments en aimant permanent 34 configurés pour coopérer par aimantation avec la paroi 6 de l'enceinte 5 lors des déplacements du dispositif de guidage 2 le long de cette paroi 6. Une telle configuration du dispositif de guidage 2 permet de maintenir aisément les roues motrices et directrices de la partie de transport 13 en contact avec la paroi 6 lors des déplacements du dispositif de guidage 2. Selon le mode de réalisation représenté sur les figures (voir plus particulièrement les figures 7 et 8), chacune des roues motrices 14, 15 et directrices 18, 19 comporte un élément en aimant permanent 34, deux éléments magnétiques 30, par exemple en acier inoxydable, disposés latéralement de part et d'autre de l'élément en aimant permanent 34 respectif, et un élément amagnétique 40, par exemple en aluminium, s'étendant sur le pourtour de l'élément en aimant permanent 34 respectif et destiné à venir en appui contre la paroi 6 de l'enceinte 4.

En outre, afin d'améliorer la stabilité du dispositif de guidage 2, et plus particulièrement de la partie de transport 13, les premier et deuxième modules de transport 13a, 13b comprennent chacun, sur leur face inférieure, un organe d'appui 35 décalé par rapport aux roues respectives et configuré pour prendre appui contre la paroi 6 lors des déplacements du dispositif de guidage 2 le long de ladite paroi.

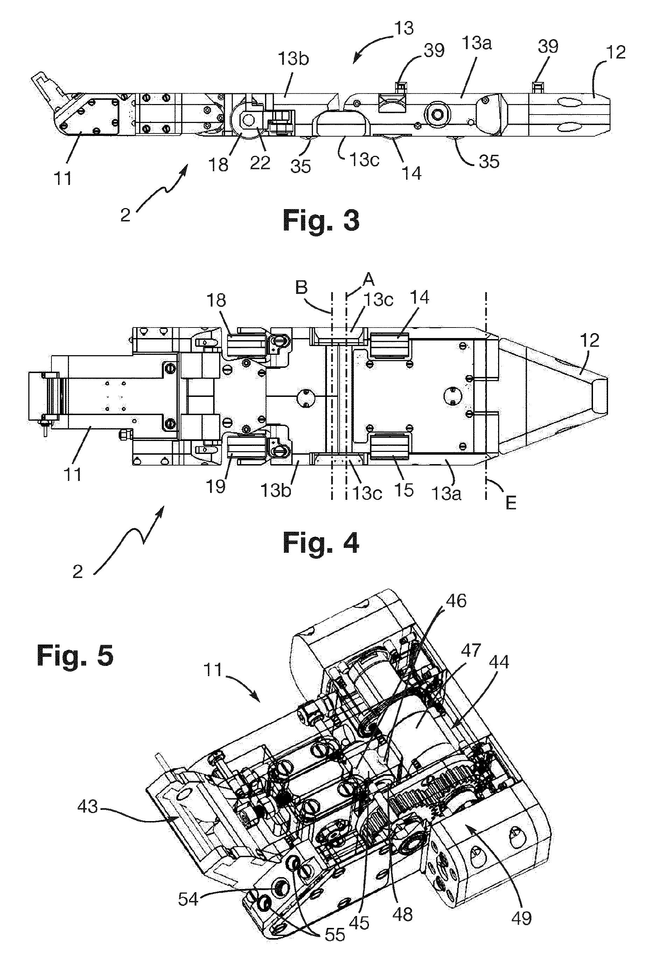

Comme montré plus particulièrement sur la figure 4, la partie de liaison 12 est montée pivotante sur le premier module de transport 13a autour d'un axe de pivotement E s'étendant transversalement à la direction d'extension De du dispositif de guidage 2, et comporte un câble d'alimentation électrique et de commande flexible (non visible sur les figures) destiné à être relié au dispositif de commande et d'alimentation électrique.

Comme montré plus particulièrement sur les figures 2 et 6, la partie de guidage et d'entraînement 11 est montée pivotante sur le deuxième module de transport 13b autour d'un axe de pivotement F s'étendant transversalement à la direction d'extension De du dispositif de guidage 2. Le deuxième module de transport 13b est équipé, comme illustré sur la figure 6, d'un système de motorisation 38 configuré pour entraîner en pivotement la partie de guidage et d'entraînement 11 par rapport au deuxième module de transport 13b autour de l'axe de pivotement F, qui est sensiblement parallèle aux axes de rotations des roues motrices 14, 15. Une telle configuration permet un pivotement contrôlé de la partie de guidage et d'entraînement 11. Selon le mode de réalisation représenté sur les figures, le système de motorisation 38 comprend un moteur d'entraînement rotatif 38a, un arbre de transmission 38b s'étendant sensiblement perpendiculairement à l'axe de pivotement F et couplé en rotation à l'arbre de sortie du moteur d'entraînement rotatif 38a, par exemple par l'intermédiaire de pignons de renvoi hélicoïdaux, et un arbre d'entraînement 38c s'étendant selon l'axe de pivotement F et couplé en rotation à l'arbre de transmission 38b, par exemple par l'intermédiaire de pignons de renvoi hélicoïdaux. Selon une variante de réalisation de l'invention, l'arbre de transmission 38b pourrait par exemple être remplacé par une courroie de transmission ou tout autre système de transmission équivalent.

Comme montré sur la figure 2, la partie de liaison 12 et le premier module de transport 13a comportent chacun, sur leur face supérieure, un élément de guidage 39, tel qu'un cavalier de guidage, configuré pour guider, en conditions d'utilisation, la lance flexible 3 par rapport à la partie arrière du dispositif de guidage 2. En outre, le deuxième module de transport 13b et la partie de guidage et d'entraînement 11 délimitent un passage de guidage 41 dans lequel est destinée à s'étendre la lance flexible 3. Le passage de guidage 41 est plus particulièrement configuré pour guider, en conditions d'utilisation, la lance flexible par rapport à la partie avant du dispositif de guidage 2.

Le deuxième module de transport 13b comporte une ouverture d'entrée 42 débouchant dans le passage de guidage 41 et à travers laquelle est destinée à être insérée la lance flexible 3, et la partie de guidage et d'entraînement 11 comporte une ouverture de sortie 43 à travers laquelle est destinée à faire saillie la lance flexible 3.

Ainsi, pour installer la lance flexible 3 sur le dispositif de guidage 2, celle-ci est insérée successivement dans les deux organes de guidage 39 et dans le passage de guidage 41 via l'ouverture d'entrée 42. La lance 3 ressort sur la face supérieure de la partie de guidage et d'entraînement 11 via ouverture de sortie 43.

De plus, comme montré sur la figure 5, la partie de guidage et d'entraînement 11 comprend un système d'entraînement 44 configuré pour, en conditions d'utilisation, déplacer la lance flexible 3 entre une position rétractée et une position déployée. Le système d'entraînement 44 comprend une courroie d'entraînement 45 équipée d'ergots 46 destinés à engrener avec des trous ménagés sur la lance flexible 3 lorsque celle-ci est engagée dans le passage de guidage 41, et un moteur d'entraînement 47 configuré pour entraîner la courroie d'entraînement 45.

Selon le mode de réalisation représenté sur les figures, le système d'entraînement 44 comprend un galet d'entraînement 48 sur lequel est engagée la courroie d'entraînement 45, et un mécanisme d'accouplement 49 configuré pour coupler en rotation le moteur d'entraînement 47 et le galet d'entraînement 48.

Afin de contrôler précisément le positionnement du dispositif de guidage 2 lors de son fonctionnement, ce dernier peut comporter différents éléments de contrôle de positionnement dont des exemples seront détaillés ci-après.

La partie de transport 13 peut par exemple comporter deux systèmes de contrôle 51 disposés respectivement les deux cotés latéraux de la partie de transport 13 et configurés pour contrôler l'altitude du dispositif de guidage 2. Chaque système de contrôle 51 comprend avantageusement une caméra de contrôle 51a et une source laser 51 b associée à la caméra de contrôle 51a respective. Chaque caméra de contrôle 51a peut également être associé à un système d'éclairage constitué, par exemple, par des diodes électroluminescentes disposées sur la périphérie de la caméra de contrôle 51 a respective.

Le dispositif de guidage 2 peut en outre comprendre au moins un inclinomètre configuré pour contrôler l'horizontalité du dispositif de guidage 2 lors de ses déplacements le long de la paroi 6. Selon le mode de réalisation représenté sur les figures, les premier et deuxième modules de transport 13a, 13b sont respectivement équipés d'un inclinomètre 50a et d'un inclinomètre 50b.

Le dispositif de guidage 2 peut également comprendre une caméra de contrôle d'orientation 52 disposée sur la partie de guidage et d'entraînement 11 et configurée pour contrôler l'orientation de la partie de guidage et d'entraînement 11 par rapport à la partie de transport 13. Avantageusement, la partie de guidage et d'entraînement 11 comporte un système d'éclairage 53 associé à la caméra de contrôle d'orientation 52. Le système d'éclairage 53 peut comprendre, par exemple, des diodes électroluminescentes disposées sur la périphérie de la caméra de contrôle d'orientation 52.

La partie de guidage et d'entraînement 11 peut en outre être équipée d'une caméra de contrôle de déploiement 54 orientée sensiblement parallèlement à la direction de déploiement de la lance 3. Avantageusement, la partie de guidage et d'entraînement 11 comporte un système d'éclairage 55 associé à la caméra de contrôle de déploiement 54. Le système d'éclairage 55 peut comprendre, par exemple, par des diodes électroluminescentes disposées sur la périphérie de la caméra de contrôle de déploiement 54.

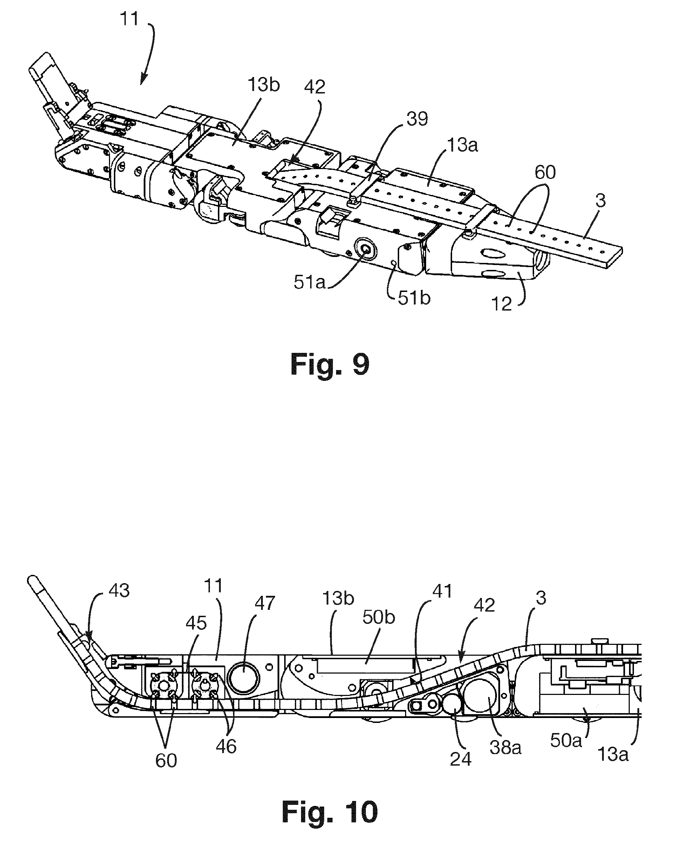

Comme montré sur les figures 9 et 10, la lance de nettoyage haute pression 3 destinée à équiper le dispositif de guidage 3 présente avantageusement une section rectangulaire, et comprend, sur sensiblement toute sa longueur, des trous 50 configurés pour coopérer avec les ergots 46 de la courroie d'entraînement 45.

Selon le mode de réalisation représenté sur les figures, la lance de nettoyage 3 comprend plusieurs conduits d'amenée de liquide sous pression s'étendant longitudinalement, et une portion d'extrémité comprenant plusieurs orifices de sortie reliés fluidiquement aux conduits d'amenée de liquide sous pression. Les orifices de sortie s'étendent avantageusement sensiblement perpendiculairement à un axe longitudinal de la lance de nettoyage haute pression. La portion d'extrémité de la lance de nettoyage haute pression peut par exemple comprendre deux orifices de sortie, dits de nettoyage, débouchant sur un premier bord longitudinal de la lance de nettoyage haute pression, et un orifice de sortie, dit de stabilisation, débouchant sur un deuxième bord longitudinal de la lance de nettoyage haute pression opposé au premier bord longitudinal.

Avantageusement, les différents orifices de sortie sont configurés de telle sorte que les efforts exercés par la pression du jet de liquide sortant par les deux orifices de sortie débouchant sur le premier bord longitudinal de la lance sont sensiblement compensés par les efforts exercés par la pression du jet de liquide sortant par l'orifice de sortie débouchant sur le deuxième bord longitudinal de la lance. Ces dispositions permettent de stabiliser la lance en conditions d'utilisation.

Lorsque l'enceinte 4 d'un générateur de vapeur d'une centrale thermique doit être nettoyée, il est procédé comme suit. Le câble d'alimentation électrique et de commande est préalablement branché sur le dispositif de commande et d'alimentation électrique, et la lance flexible 3 est introduite dans les organes de guidage 39 et dans le passage de guidage 41. L'équipement du dispositif de guidage 2 réalisé, ce dernier est introduit, comme illustré sur la figure 1, dans l'enceinte 4 à partir d'un des deux trous de poing 5. Le dispositif de guidage 2 est alors posé sur la face intérieure de la paroi 6 de l'enceinte 4 de l'échangeur de chaleur 1. Le dispositif de guidage 2 est maintenu au contact de la paroi métallique 6 qui est généralement verticale par l'intermédiaire des éléments magnétiques 34 disposés sur les roues motrices 14, 15, et directrices 18, 19.

Ainsi disposé, le dispositif de guidage 2 peut être commandé par un opérateur à l'aide d'un dispositif électronique, idéalement informatisé, tel que par exemple un ordinateur disposant d'une carte d'acquisition branchée au dispositif de guidage par l'intermédiaire du câble d'alimentation électrique et de commande. L'opérateur accède alors par ces moyens électroniques à la fois aux éléments de contrôle que sont notamment les caméras 51 a, 52, 54 disposées sur le dispositif de guidage 2, et à la commande des différentes motorisations 16, 17, 24, 38, 47 du dispositif de guidage 2. La commande des différentes motorisations peut se faire par exemple au moyen d'une manette de commande.

L'opérateur peut alors utiliser les trois caméras de contrôle disposées sur le dispositif de guidage 2 pour déterminer la position de ce dernier vis-à-vis de l'enceinte 4. Une fois la position du dispositif 2 établie, l'opérateur peut contrôler les roues motrices et directrices afin de déplacer le dispositif de guidage 2 à l'endroit voulu de la paroi 6. Le dispositif de guidage 2 en place, l'opérateur actionne dans un premier temps le système de motorisation 38 pour obtenir l'angle de déploiement requis de la lance 3, et dans un deuxième temps le moteur d'entraînement 47 afin de déployer la lance 3 à la longueur désirée. La longueur requise de lance 3 déployée étant atteinte, l'opérateur injecte du fluide sous pression dans les conduits d'amenée de liquide et réalise un nettoyage de la zone à nettoyer.

Selon un mode de réalisation de l'invention, la partie de guidage et d'entraînement 11 comprend un élément de détection (non représenté sur les figures), tel qu'un capteur inductif, configuré pour détecter, en conditions d'utilisation, un positionnement de la lance 3 en position rétractée. Selon ce mode de réalisation, le dispositif de guidage 2 comprend avantageusement une unité de commande configurée pour empêcher un déplacement de la partie de transport 13 tant qu'un positionnement de la lance 3 en position rétractée n'a pas été détecté par l'élément de détection. Ces dispositions permettent d'interdire tout déplacement du dispositif de guidage 2 avec la lance en position déployée.

Selon un mode de réalisation de l'invention, le câble d'alimentation électrique et de commande est en outre configuré pour alimenter pneumatiquement le dispositif de guidage 2 de manière à mettre en surpression l'espace intérieur du dispositif de guidage 2. Ces dispositions permettent d'éviter, lors de l'utilisation du dispositif de guidage dans un générateur de vapeur, de polluer l'espace intérieur du dispositif de guidage avec un fluide présent dans le générateur de vapeur. Des orifices de fuite peuvent éventuellement être prévus à proximité des différentes caméras équipant le dispositif de guidage 2 afin de protéger leur objectif par un jet d'air.

Comme il va de soi, l'invention ne se limite pas à la seule forme d'exécution de ce dispositif de guidage pour lance flexible, décrite ci-dessus à titre d'exemple, elle en embrasse au contraire toutes les variantes de réalisation, elle pourra notamment utiliser un moyen de maintien alternatif à l'aimantation tel que, par exemple, l'aspiration.

## Revendications

1. Dispositif de guidage (2) destiné à guider une lance flexible (3) pour le nettoyage d'une enceinte (4) équipée d'une ouverture d'accès (5), le dispositif de guidage (2) s'étendant selon une direction d'extension (De) et comportant :
- une partie de transport (13) comprenant des moyens de roulement configurés pour rouler sur une paroi (6) de l'enceinte (4), et des moyens de maintien configurés pour maintenir les moyens de roulement en contact avec ladite paroi (6) lors des déplacements du dispositif de guidage le long de ladite paroi,
- une partie de liaison (12) montée sur la partie de transport (13) et destinée à être reliée à un dispositif d'alimentation électrique,
- une partie de guidage et d'entraînement (11) comprenant un système d'entraînement (44) configuré pour, en conditions d'utilisation, déplacer la lance flexible (3) entre une position rétractée et une position déployée, la partie de guidage et d'entraînement (11) étant montée pivotante sur la partie de transport (13) autour d'un premier axe de pivotement (F) s'étendant transversalement à la direction d'extension (De), la partie de transport (13) étant disposée entre la partie de liaison (12) et la partie de guidage et d'entraînement (11),
**caractérisé en ce que** la partie de transport (13) comporte un premier module de transport (13a) et un deuxième module de transport (13b) montés articulés l'un par rapport à l'autre, **en ce que** les moyens de roulement comportent au moins une roue motrice (14, 15) montée sur le premier module de transport (13a), et au moins une roue directrice (18, 19) montée sur le deuxième module de transport (13b), et **en ce que** le dispositif de guidage comprend un système de direction (21) monté sur le deuxième module de transport (13b) et configuré pour régler l'angle de braquage de l'au moins une roue directrice (18, 19).

2. Dispositif de guidage (2) selon la revendication 1, dans lequel le premier module de transport (13a) et le deuxième module de transport (13b) sont montés articulés l'un par rapport à l'autre autour d'au moins un axe d'articulation (A, B) s'étendant transversalement à la direction d'extension (De) du dispositif de guidage.

3. Dispositif de guidage (2) selon la revendication 1 ou 2, dans lequel la partie de liaison (12) est montée sur le premier module de transport (13a) et la partie de guidage et d'entraînement (11) est montée sur le deuxième module de transport (13b).

4. Dispositif de guidage (2) selon l'une quelconque des revendications 1 à 3, dans lequel la partie de liaison (12) est montée pivotante sur la partie de transport (13) autour d'un deuxième axe de pivotement (E) s'étendant transversalement à la direction d'extension (De) du dispositif de guidage.

5. Dispositif de guidage (2) selon l'une quelconque des revendications 1 à 4, dans lequel les moyens de maintien comportent des éléments magnétiques (34), tels que des éléments en aimant permanent, configurés pour coopérer par aimantation avec la paroi (6) de l'enceinte (4).

6. Dispositif de guidage (2) selon la revendication 5, dans lequel chaque roue motrice (14, 15) est équipée d'au moins un élément magnétique (34), et chaque roue directrice (18, 19) est équipée d'au moins un élément magnétique (34).

7. Dispositif de guidage (2) selon l'une quelconque des revendications 1 à 6, dans lequel les moyens de roulement comportent au moins deux roues motrices (14, 15) montées sur le premier module de transport (13a) et d'axes de rotation sensiblement parallèles, et au moins deux roues directrices (18, 19) montées sur le deuxième module de transport (13b).

8. Dispositif de guidage (2) selon l'une quelconque des revendications 1 à 7, dans lequel le système de direction (21) comprend :
- au moins un organe de support (22, 23) sur lequel est monté mobile en rotation l'au moins une roue directrice (14, 15), l'au moins un organe de support (22, 23) étant monté pivotant sur le deuxième module de transport (13b) autour d'un axe de pivotement,
- un moteur d'entraînement (24), et
- un mécanisme de transformation de mouvement (25) configuré pour transformer le mouvement de rotation du moteur d'entraînement (24) en un mouvement de pivotement de l'au moins un organe de support (22, 23).

9. Dispositif de guidage (2) selon l'une quelconque des revendications 1 à 8, dans lequel le système d'entraînement (44) comprend une courroie d'entraînement (45) équipée d'ergots (46) destinés à engrener avec des trous ménagés sur la lance (3).

10. Dispositif de guidage (2) selon l'une quelconque des revendications 1 à 9, lequel comporte des moyens de contrôle configurés pour contrôler le positionnement du dispositif de guidage (2).

11. Dispositif de guidage (2) selon la revendication 10, dans lequel les moyens de contrôle comportent au moins une caméra de contrôle (51 a) et au moins une source laser disposés sur un coté du dispositif de guidage (2) et configurés pour contrôler l'altitude du dispositif de guidage (2).

12. Dispositif de guidage (2) selon la revendication 10 ou 11, dans lequel les moyens de contrôle comportent au moins un inclinomètre configuré pour contrôler l'horizontalité du dispositif de guidage (2) lors de ses déplacements le long de la paroi (6).

13. Dispositif de guidage (2) selon l'une quelconque des revendications 1 à 12, dans lequel la partie de guidage et d'entraînement (11) comprend un élément de détection, tel qu'un capteur inductif, configuré pour détecter, en conditions d'utilisation, un positionnement de la lance (3) en position rétractée.

14. Ensemble pour le nettoyage d'une enceinte (4) équipée d'une ouverture d'accès (5), comprenant :
- un dispositif de guidage (2) selon l'une quelconque des revendications 1 à 13, et
- une lance de nettoyage haute pression (3) flexible et de section rectangulaire, la lance de nettoyage haute pression (3) comprenant plusieurs conduits d'amenée de liquide sous pression et une portion d'extrémité comprenant plusieurs orifices de sortie reliés fluidiquement aux conduits d'amenée de liquide sous pression.

## Patentansprüche

1. Führungsvorrichtung (2), die dazu bestimmt ist, eine flexible Lanze (3) zum Reinigen eines Gehäuses (4) zu führen, das mit einer Zugangsöffnung (5) ausgestattet ist, wobei sich die Führungsvorrichtung (2) in eine Ausbreitungsrichtung (De) erstreckt, und Folgendes umfasst:
- einen Transportabschnitt (13), Rollmittel umfassend, die konfiguriert sind, um auf einer Wand (6) des Gehäuses (4) zu rollen, sowie Haltemittel, die konfiguriert sind, um die Rollmittel bei den Verschiebungen der Führungsvorrichtung entlang der besagten Wand in Kontakt mit der besagten Wand (6) zu halten,
- einen Verbindungsabschnitt (12), der auf dem Transportabschnitt (13) montiert ist, und dazu bestimmt ist, mit einer Stromversorgungsvorrichtung verbunden zu werden,
- einen Abschnitt zum Führen und Antreiben (11), ein Antriebssystem (44) umfassend, das konfiguriert ist, um die flexible Lanze (3) unter Betriebsbedingungen zwischen einer eingezogenen Position und einer ausgefahrenen Position zu verfahren, wobei der Abschnitt zum Führen und Antreiben (11) um eine erste Schwenkachse (F), die sich quer zur Ausbreitungsrichtung (De) erstreckt, schwenkbar auf dem Transportabschnitt (13) montiert ist, wobei der Transportabschnitt (13) zwischen dem Verbindungsabschnitt (12) und dem Abschnitt zum Führen und Antreiben (11) angeordnet ist,
**dadurch gekennzeichnet, dass** der Transportabschnitt (13) ein erstes Transportmodul (13a) und ein zweites Transportmodul (13b) umfasst, die beweglich zueinander montiert sind, dadurch, dass die Rollmittel zumindest ein Antriebsrad (14, 15) umfassen, das auf dem ersten Transportmodul (13a) montiert ist, sowie zumindest ein lenkbares Rad (18, 19), das auf dem zweiten Transportmodul (13b) montiert ist, und dadurch, dass die Führungsvorrichtung ein Lenksystem (21) umfasst, das auf dem zweiten Transportmodul (13b) montiert ist, und konfiguriert ist, um den Einschlagwinkel des zumindest einen lenkbaren Rades (18, 19) einzustellen.

2. Führungsvorrichtung (2) nach Anspruch 1, wobei das erste Transportmodul (13a) und das zweite Transportmodul (13b) um zumindest eine Gelenkachse (A, B) gelenkig zueinander montiert sind, die sich quer zur Ausbreitungsrichtung (De) der Führungsvorrichtung erstreckt.

3. Führungsvorrichtung (2) nach Anspruch 1 oder 2, wobei der Verbindungsabschnitt (12) auf dem ersten Transportmodul (13a) montiert ist und der Abschnitt zum Führen und Antreiben (11) auf dem zweiten Transportmodul (13b) montiert ist.

4. Führungsvorrichtung (2) nach einem der Ansprüche 1 bis 3, wobei der Verbindungsabschnitt (12) um eine zweite Schwenkachse (E), die sich quer zur Ausbreitungsrichtung (De) der Führungsvorrichtung erstreckt, schwenkbar auf dem Transportabschnitt (13) montiert ist;

5. Führungsvorrichtung (2) nach einem der Ansprüche 1 bis 4, wobei die Haltemittel Magnetelemente (34), wie Elemente aus einem Dauermagneten, umfassen, die konfiguriert sind, um durch Magnetisierung mit der Wand (6) des Gehäuses (4) zusammenzuwirken.

6. Führungsvorrichtung (2) nach Anspruch 5, wobei jedes Antriebsrad (14, 15) mit zumindest einem Magnetelement (34) ausgestattet ist, und jedes lenkbare Rad (18, 19) mit zumindest einem Magnetelement (34) ausgestattet ist.

7. Führungsvorrichtung (2) nach einem der Ansprüche 1 bis 6, wobei die Rollmittel zumindest zwei Antriebsräder (14, 15) umfassen, die auf dem ersten Transportmodul (13a) montiert sind, sowie in etwa parallele Drehachsen, sowie zumindest zwei lenkbare Räder (18, 19), die auf dem zweiten Transportmodul (13b) montiert sind.

8. Führungsvorrichtung (2) nach einem der Ansprüche 1 bis 7, wobei das Lenksystem (21) Folgendes umfasst:
- zumindest ein Halteorgan (22, 23), auf dem das zumindest eine lenkbare Rad (14, 15) drehbar montiert ist, wobei das zumindest eine Halteorgan (22, 23) um eine Schwenkachse schwenkbar auf dem zweiten Transportmodul (13b) montiert ist,
- einen Antriebsmotor (24), und
- einen Bewegungsumwandlungsmechanismus (25), der konfiguriert ist, um die Drehbewegung des Antriebsmotors (24) in eine Schwenkbewegung des zumindest einen Halteorgans (22, 23) umzuwandeln.

9. Führungsvorrichtung (2) nach einem der Ansprüche 1 bis 8, wobei das Antriebssystem (44) einen Antriebsriemen (45) umfasst, der mit Klauen (46) ausgestattet ist, die dazu bestimmt sind, in die Löcher einzugreifen, die in die Lanze (3) eingearbeitet sind.

10. Führungsvorrichtung (2) nach einem der Ansprüche 1 bis 9, welche Kontrollmittel umfasst, die konfiguriert sind, um die Positionierung der Führungsvorrichtung (2) zu kontrollieren.

11. Führungsvorrichtung (2) nach Anspruch 10, wobei die Kontrollmittel zumindest eine Kontrollkamera (51a) und zumindest eine Laserquelle umfassen, die auf einer Seite der Führungsvorrichtung (2) angeordnet sind, und konfiguriert sind, um die Höhenlage der Führungsvorrichtung (2) zu kontrollieren.

12. Führungsvorrichtung (2) nach Anspruch 10 oder 11, wobei die Kontrollmittel zumindest einen Neigungsmesser umfassen, der konfiguriert ist, um die waagerechte Lage der Führungsvorrichtung (2) bei deren Verschiebungen entlang der Wand (6) zu kontrollieren.

13. Führungsvorrichtung (2) nach einem der Ansprüche 1 bis 12, wobei der Abschnitt zum Führen und Antreiben (11) ein Erkennungselement, wie einen Induktivsensor, umfasst, das konfiguriert ist, um unter Betriebsbedingungen eine Positionierung der Lanze (3) in der eingezogenen Position zu erkennen.

14. Einheit zum Reinigen eines Gehäuses (4), das mit einer Zugangsöffnung (5) ausgestattet ist, Folgendes umfassend:
- eine Führungsvorrichtung (2) nach einem der Ansprüche 1 bis 13, und
- eine flexible Hochdruckreinigungslanze (3) mit einem rechteckigen Querschnitt, wobei die Hochdruckreinigungslanze (3) mehrere Leitungen zum Zuführen einer unter Druck stehenden Flüssigkeit umfasst, sowie einen Endabschnitt, der mehrere Austrittsöffnungen umfasst, die fluidtechnisch mit den Leitungen zum Zuführen einer unter Druck stehenden Flüssigkeit verbunden sind.

## Claims

1. A guide device (2) intended for guiding a flexible lance (3) for cleaning an enclosure (4) equipped with an access opening (5), the guide device (2) extending along a direction of extension (De) and including :
- a transport portion (13) comprising rolling means configured to roll on a wall (6) of the enclosure (4), and holding means configured to hold the rolling means in contact with said wall (6) during the displacements of the guide device along said wall,
- a connecting portion (12) mounted on the transport portion (13) and intended to be connected to an electrical power supply device,
- a guide and drive portion (11) comprising a drive system (44) configured to displace, in use, the flexible lance (3) between a retracted position and a deployed position, the guide and drive portion (11) being pivotally mounted on the transport portion (13) about a first pivot axis (F) extending transverse to the direction of extension (De), the transport portion (13) being disposed between the connecting portion (12) and the guide and drive portion (11),
**characterized in that** the transport portion (13) includes a first transport module (13a) and a second transport module (13b) mounted articulated with respect to one another, and **in that** the rolling means include at least one driving wheel (14, 15) mounted on the first transport module (13a), and at least one steerable wheel (18, 19) mounted on the second transport module (13b), and **in that** the guide device comprises a steering system (21) mounted on the second transport module (13b) and configured to adjust the steering angle of the at least one steerable wheel (18, 19).

2. The guide device (2) according to claim 1, wherein the first transport module (13a) and the second transport module (13b) are mounted articulated with respect to one another about at least one articulation axis (A, B) extending transverse to the direction of extension (De) of the guide device.

3. The guide device (2) according to claim 1 or 2, wherein the connecting portion (12) is mounted on the first transport module (13a) and the guide and drive portion (11) is mounted on the second transport module (13b).

4. The guide device (2) according to any one of claims 1 to 3, wherein the connecting portion (12) is pivotally mounted on the transport portion (13) about a second pivot axis (E) extending transverse to the direction of extension (De) of the guide device.

5. The guide device (2) according to any one of claims 1 to 4, wherein the holding means include magnetic elements (34), such as permanent magnet elements, configured to cooperate, by magnetization, with the wall (6) of the enclosure (4).

6. The guide device (2) according to claim 5, wherein each driving wheel (14, 15) is equipped with at least one magnetic element (34), and each steerable wheel (18, 19) is equipped with at least one magnetic element (34).

7. The guide device (2) according to any one of claims 1 to 6, wherein the rolling means include at least two driving wheels (14, 15) mounted on the first transport module (13a) and having substantially parallel rotation axes, and at least two steerable wheels (18, 19) mounted on the second transport module (13b).

8. The guide device (2) according to any one of claims 1 to 7, wherein the steering system (21) comprises :
- at least one support member (22, 23) on which the at least one steerable wheel (14, 15) is mounted movable in rotation, the at least one support member (22, 23) being pivotally mounted on the second transport module (13b) about a pivot axis,
- a drive motor (24), and
- a motion conversion mechanism (25) configured to convert the rotational motion of the drive motor (24) into a pivoting motion of the at least one support member (22, 23).

9. The guide device (2) according to any one of claims 1 to 8, wherein the drive system (44) comprises a drive belt (45) equipped with lugs (46) intended to mesh with holes that are arranged on the flexible lance (3).

10. The guide device (2) according to any one of claims 1 to 9, which includes control means configured to control the positioning of the guide device (2).

11. The guide device (2) according to claim 10, wherein the control means include at least one control camera (51a) and at least one laser source disposed on one side of the guide device (2) and configured to control the altitude of the guide device (2).

12. The guide device (2) according to claim 10 or 11, wherein the control means include at least one inclinometer configured to control the horizontality of the guide device (2) during the displacements thereof along the wall (6).

13. The guide device (2) according to any one of claims 1 to 12, wherein the guide and drive portion (11) comprises a detection element, such as an inductive sensor, configured to detect, in use, a positioning of the flexible lance (3) in the retracted position.

14. An arrangement for cleaning an enclosure (4) equipped with an access opening (5), comprising :
- a guide device (2) according to any one of claims 1 to 13, and
- a high-pressure cleaning lance (3), flexible and having a rectangular section, the high-pressure cleaning lance (3) comprising several pressurized liquid conveying conduits and an end portion comprising several outlet orifices fluidly connected to the pressurized liquid conveying conduits.
